# EUROPÄISCHE PATENTSCHRIFT

(11) **EP 3 521 142 B1**
(45) Veröffentlichungstag und Bekanntmachung des Hinweises auf die Patenterteilung: **26.05.2021**
(21) Anmeldenummer: 19152280.4
(22) Anmeldetag: 17.01.2019
(51) Int. Cl.: B62D 21/02, B62D 21/03

(54) **QUERTRÄGER, INSBESONDERE FRONTQUERTRÄGER, FÜR EIN KRAFTFAHRZEUG**
CROSSBAR, PARTICULARLY FRONT CROSSBAR FOR MOTOR VEHICLE
TRANSVERSE, EN PARTICULIER TRANSVERSE AVANT, POUR UN VÉHICULE AUTOMOBILE

(30) Priorität: 31.01.2018 DE 102018102129
(43) Veröffentlichungstag der Anmeldung: 07.08.2019
(73) Patentinhaber: MAN Truck & Bus SE, 80995 München (DE)
(72) Erfinder: Weber, Maximillian, 80798 München (DE); Straube, Sebastian, 81739 München (DE); Schorr, Alois, 85757 Karlsfeld (DE); Butscher, Jochen, 82288 Kottgeisering (DE)
(74) Vertreter: v. Bezold & Partner Patentanwälte - PartG mbB

(56) Entgegenhaltungen:
- EP-A1- 2 829 460
- EP-A1- 2 957 482
- DE-A1-102005 038 150
- DE-A1-102008 039 949
- DE-A1-102012 016 852
- DE-A1-102014 108 804

## Beschreibung

Die Erfindung betrifft einen Querträger, insbesondere Frontquerträger, für ein Kraftfahrzeug, insbesondere Nutzfahrzeug.

Frontquerträger werden als Rahmenbauteile für Rahmen von Kraftfahrzeugen verwendet.

Beispielsweise ist aus der DE 10 2012 016 852 A1 ein Frontquerträger für ein Nutzfahrzeug bekannt. Der Frontquerträger weist ein offenes Profil mit Obergurt, Untergurt und Stegen auf.

Insbesondere im Militär-, Kommunal- und Schwerlastbereich können Kraftfahrzeuge benötigt werden, die die Möglichkeit zur Anbindung von Schäkeln, Frontanbauplatten und Geräteträgern ermöglichen.

Aus der DE 10 2008 039 949 A1 ist ferner ein Querträger für ein Nutzfahrzeug bekannt. Der Querträger ist als Hohlprofil ausgebildet. Der Querträger weist ein erstes Verbindungselement, mittels welchem der Querträger mit einem ersten Längsträger verbindbar ist, und ein zweites Verbindungselement, mittels welchem der Querträger mit einem zweiten Längsträger verbindbar ist, auf. Ein Verbindungsstück ist zwischen den beiden Verbindungselementen angeordnet und verbindet die beiden Verbindungselemente miteinander. Der Querträger ist einstückig ausgebildet.

Querträger für Kraftfahrzeuge sind ferner bereits aus der EP 2 957 482 A1, der DE 10 2005 038150 A1, der DE 10 2014 108804 A1 und der EP 2 829 460 A1 bekannt.

Der Erfindung liegt die Aufgabe zu Grunde, einen alternativen und/oder verbesserten Querträger zu schaffen.

Die Aufgabe wird gelöst durch die Merkmale des unabhängigen Anspruchs. Vorteilhafte Weiterbildungen sind in den abhängigen Ansprüchen und der Beschreibung angegeben.

Der Querträger ist insbesondere ein Frontquerträger für ein Kraftfahrzeug, insbesondere Nutzfahrzeug. Der Querträger weist einen ersten Gurt (z. B. Trägergurt, Trägerflansch, Trägerband), insbesondere Obergurt, und einen zweiten Gurt (z. B. Trägergurt, Trägerflansch, Trägerband), insbesondere Untergurt, auf. Der Querträger weist eine erste Schäkelaufnahme zur lösbaren Anbindung eines Anbauteils (z. B. Schäkel, Anbauplatte, Geräteträger usw.) an den Querträger auf. Der Querträger weist eine zweite Schäkelaufnahme zur lösbaren Anbindung eines Anbauteils (z. B. Schäkel, Anbauplatte, Geräteträger usw.) an den Querträger auf. Die erste Schäkelaufnahme und die zweite Schäkelaufnahme sind integral-einstückig in den ersten Gurt und/oder den zweiten Gurt integriert.

Die Erfindung schafft einen Querträger mit offenem Profil, bei dem die Schäkelaufnahmen zur Anbindung eines Anbauteils auf vorteilhafte Weise integral-einstückig in den ersten Gurt und/oder den zweiten Gurt integriert sind. Die Integration ermöglicht eine bauraumsparende Anordnung der Schäkelaufnahmen. Zusätzlich müssen die Schäkelaufnahmen nicht aufwendig an dem Querträger befestigt werden. Damit bestehen keine Probleme aufgrund der Notwendigkeit mehrerer Werkzeuge, Kontaktkorrosion, Wärmeausdehnung, Lösen von Verschraubungen, notwendigen Schweißarbeiten und somit keine Schwächung des Grundmaterials. Durch die Integration in den ersten Gurt und/oder den zweiten Gurt können die Schäkelaufnahmen insbesondere separat zu Verbindungsbereichen für Lagerböcke des Querträgers und Anbringungsbereichen für einen Stoßfänger vorgesehen sein. Damit können diese Verbindungsbereiche und Anbringungsbereiche insbesondere ohne Rücksicht auf das Vorhandensein der Schäkelaufnahmen optimiert ausgebildet werden.

Insbesondere können die erste Schäkelaufnahme und die zweite Schäkelaufnahme in den Untergurt integriert sein.

Beispielsweise können der erste Gurt und/oder der zweite Gurt bandförmig ausgebildet sein.

Die Schäkelaufnahmen erstrecken sich, insbesondere bolzenförmig, ausgehend von dem ersten Gurt und/oder dem zweiten Gurt. Beispielsweise können sich die Schäkelaufnahmen in einer Vorwärtsfahrtrichtung des Kraftfahrzeugs, d. h. in einer Richtung, zu der eine Vorderseite des Querträgers gerichtet ist, erstrecken. Insbesondere können die Schäkelaufnahmen an deren freien Enden jeweils eine Durchgangsöffnung zur Aufnahme von Bolzen aufweisen. Zweckmäßig können die Durchgangsöffnungen miteinander fluchten und/oder parallel zu einer Längsachse des Querträgers sein.

Es ist möglich, dass die erste Schäkelaufnahme und die zweite Schäkelaufnahme spiegelsymmetrisch (z. B. bezüglich einer Symmetrieebene, die den Querträger zentral teilt und senkrecht zu einer Längsachse des Querträgers angeordnet ist) zueinander ausgebildet sind. Insbesondere kann der Querträger in Gurtbauweise und/oder mit einem offenem Profil vorgesehen sein.

Es ist auch möglich, dass der erste Gurt und/oder der zweite Gurt ein Mittelgurt des Querträgers ist.

In einem Ausführungsbeispiel weitet sich der erste Gurt und/oder der zweite Gurt am Integrationsbereich der ersten Schäkelaufnahme und am Integrationsbereich der zweiten Schäkelaufnahme, insbesondere oberseitig und unterseitig, auf. Damit findet eine Verstärkung im Integrationsbereich statt.

In einem weiteren Ausführungsbeispiel sind die erste Schäkelaufnahme und die zweite Schäkelaufnahme integral-einstückig an entgegensetzten Längsenden des ersten Gurts und/oder des zweiten Gurts integriert.

In einem weiteren Ausführungsbeispiel sind der erste Gurt und der zweite Gurt an deren ersten Längsenden von einem ersten Außenstegbereich und an deren entgegengesetzten zweiten Längsenden von einem zweiten Außenstegbereich verbunden. Der erste Außenstegbereich ist außenliegend von der und insbesondere direkt anschließend an die erste Schäkelaufnahme angeordnet. Alternativ oder zusätzlich ist der zweite Außenstegbereich außenliegend von der und insbesondere direkt anschließend an die zweite Schäkelaufnahme angeordnet. Damit können Lasten an den Schäkelaufnahmen auf vorteilhafte Weise in die Außenstegbereiche geleitet werden.

Wie hierin verwendet, können sich die Begriffe "außenliegend" und "innenliegend" insbesondere auf eine relative Positionierung von Elementen und Bereichen entlang einer Längsachse des Querträgers bezüglich dessen Mittelteil beziehen. D. h., wenn Element A außenliegend von Element B ist, kann Element A in einer Richtung entlang der Längsachse des Querträgers entfernter zum Mittelteil / Zentrum des Querträgers angeordnet sein als Element B. Mit anderen Worten gesagt, Element B kann innenliegend von Element A sein.

In einer Ausführungsform weist der Querträger ferner einen ersten Stoßfängeranbringungsbereich und optional einen zweiten Stoßfängeranbringungsbereich zur, insbesondere direkten, Anbringung eines Stoßfängers an den Querträger auf. Damit ist es nicht notwendig, den Stoßfänger beispielsweise über ein Adapter aufwendig mit dem Querträger zu verbinden.

Zweckmäßig können der erste Stoßfängeranbringungsbereich und der zweite Stoßfängeranbringungsbereich spiegelsymmetrisch (z. B. bezüglich einer Symmetrieebene, die den Querträger zentral teilt und senkrecht zu einer Längsachse des Querträgers angeordnet ist) zueinander ausgebildet sein.

In einer weiteren Ausführungsform weist der Querträger ferner einen ersten Verbindungsbereich zur Verbindung des Querträgers mit einem ersten Lagerbock zur Anbindung an einen ersten Längsträger und optional einen zweiten Verbindungsbereich zur Verbindung des Querträgers mit einem zweiten Lagerbock zur Anbindung an einen zweiten Längsträger auf. Damit kann der Querträger an den Lagerböcken befestigt werden, die wiederum an den Längsträgern befestigt werden können. Die Lagerböcke können als Kombinationslagerböcke multifunktional eingesetzt werden, beispielsweise zur Anbindung weiterer Bauteile. Zusätzlich ermöglicht die Zwischenschaltung der Kombinationslagerböcke, dass ein möglichst breiter Raum zur Anordnung beispielsweise eines Kühlers hinter dem Querträger und zwischen den Lagerblöcken geschaffen wird.

Zweckmäßig können der erste Verbindungsbereich und der zweite Verbindungsbereich spiegelsymmetrisch (z. B. bezüglich einer Symmetrieebene, die den Querträger zentral teilt und senkrecht zu einer Längsachse des Querträgers angeordnet ist) zueinander ausgebildet sein.

In einer weiteren Ausführungsform sind die erste Schäkelaufnahme und die zweite Schäkelaufnahme separat zu dem ersten Stoßfängeranbringungsbereich, dem zweiten Stoßfängeranbringungsbereich, dem ersten Verbindungsbereich und/oder dem zweiten Verbindungsbereich ausgebildet. Dies ermöglicht, dass die Verbindungsbereiche und Anbringungsbereiche insbesondere ohne Rücksicht auf das Vorhandensein der Schäkelaufnahmen optimiert ausgebildet werden können.

In einer Ausführungsvariante ist der erste Stoßfängeranbringungsbereich außenliegend von dem ersten Außenstegbereich und/oder dem ersten Verbindungsbereich angeordnet. Alternativ oder zusätzlich ist der zweite Stoßfängeranbringungsbereich außenliegend von dem zweiten Außenstegbereich und/oder dem zweiten Verbindungsbereich angeordnet. Damit kann der Stoßfänger an den Längsenden des Querträgers gehalten werden, während der Querträger an den Längsenden des ersten Gurts und des zweiten Gurts an den Lagerböcken getragen ist.

In einer weiteren Ausführungsvariante ist der erste Verbindungsbereich innenliegend von dem ersten Stoßfängeranbringungsbereich angeordnet und/oder zumindest teilweise in den ersten Außenstegbereich integriert. Alternativ oder zusätzlich ist der zweite Verbindungsbereich innenliegend von dem zweiten Stoßfängeranbringungsbereich angeordnet und/oder zumindest teilweise in den zweiten Außenstegbereich integriert. Die Integration der Verbindungsbereiche in die Außenstegbereiche ermöglicht einen optimierten Kraftfluss bei der Abstützung des Querträgers an den Lagerböcken.

In einem Ausführungsbeispiel weist der erste Verbindungsbereich und/oder der zweite Verbindungsbereich mindestens eine erste Abstützfläche zum Abstützen an dem jeweiligen Lagerbock und mindestens eine zweite Abstützfläche zum Abstützen an dem jeweiligen Lagerbock auf. Die mindestens eine erste Abstützfläche und die mindestens eine zweite Abstützfläche sind zueinander angewinkelt, insbesondere spitzwinkelig, rechtwinklig oder stumpfwinklig. Die angewinkelte Ausrichtung der Abstützflächen zueinander ermöglicht, dass die Lasten an dem Querträger in mehreren Richtungen in die Lagerböcke eingeleitet werden können, zum Beispiel entlang einer Längsrichtung des Querträgers und senkrecht hierzu.

In einem weiteren Ausführungsbeispiel weist der erste Stoßfängeranbringungsbereich und/oder der zweite Stoßfängeranbringungsbereich einen innenliegenden Anbringungsabschnitt und einen außenliegenden Anbringungsabschnitt auf, wobei der außenliegende Anbringungsabschnitt bezüglich des innenliegenden Anbringungsabschnitts zurückversetzt ist (insbesondere bezüglich einer Vorderseite des Querträgers). Damit ist der Querträger an seinen Längsenden in der Form an einen aerodynamisch (konvex) gekrümmten Stoßfänger angepasst.

In einem weiteren Ausführungsbeispiel weist der Querträger ferner eine erste Durchgangsöffnung, insbesondere Kühlluftöffnung, die zwischen dem ersten Gurt und dem zweiten Gurt angeordnet ist (und beispielsweise an die erste Schäkelaufnahme angrenzt), auf. Optional weist der Querträger eine zweite Durchgangsöffnung, insbesondere Kühlluftöffnung, die zwischen dem ersten Gurt und dem zweiten Gurt angeordnet ist (und beispielsweise an die zweite Schäkelaufnahme angrenzt), auf. Damit kann Kühlluft zu einem hinter der Querträger angeordneten Kühler zugeführt werden.

In einer Weiterbildung ist die erste Durchgangsöffnung und/oder die zweite Durchgangsöffnung im Wesentlichen tropfenförmig ausgebildet, insbesondere mit einer zum Zentrum des Querträgers hin gerichteten Tropfenspitze. Damit kann die Durchgangsöffnung möglichst groß dimensioniert und gleichzeitig an einen optimalen Kraftfluss im Querträger angepasst sein.

In einer Ausführungsform ist ein Auflagebereich zur Abstützung eines Stoßfängers an einer Oberseite des ersten Gurts angeordnet. Damit kann der Stoßfänger insbesondere bei Belastung in einer Vertikalrichtung an dem Querträger abgestützt werden. Zweckmäßig kann der Stoßfänger immer am Querträger anliegen oder sich erst bei Belastung in Vertikalrichtung an den Querträger anlegen.

In einer weiteren Ausführungsform ist eine Oberseite des ersten Gurts, insbesondere konkav, gekrümmt und/oder eine Unterseite des zweiten Gurts, insbesondere konkav, gekrümmt.

In einer weiteren Ausführungsform ist eine Vorderseite des ersten Gurts und/oder eine Vorderseite des zweiten Gurts, insbesondere konvex, gekrümmt. Damit kann der Querträger an einen aerodynamisch konvex gekrümmten Stoßfänger angepasst sein.

In einer Ausführungsvariante ist eine Rückseite des ersten Gurts und/oder eine Rückseite des zweiten Gurts wellenförmig, insbesondere Doppel-S-förmig. Alternativ oder zusätzlich weist eine Rückseite des ersten Gurts und/oder eine Rückseite des zweiten Gurts zumindest eine (z. B. zwei), insbesondere konkave, Aussparung auf. In den Aussparungen können Bereiche eines hinter dem Querträger angeordneten Bauteils, z. B. eines Kühlers, zumindest teilweise untergebracht werden, sodass sich eine bauraumsparende Anordnung ergibt.

In einer weiteren Ausführungsvariante ist der Querträger integral-einstückig ausgebildet.

In einem Ausführungsbeispiel ist der Querträger gegossen, geschmiedet oder mittels additiver Fertigung, insbesondere mittels Lasersintern, hergestellt.

Insbesondere können die Schäkelaufnahmen ohne Verwendung eines Fügeverfahrens (z. B. Schweißen) mit dem ersten Gurt und/oder dem zweiten Gurt verbunden sein.

In einem weiteren Ausführungsbeispiel weist der Querträger ferner mindestens einen Stegbereich (z. B. Innenstegbereich, Außenstegbereich usw.) auf, der den ersten Gurt und den zweiten Gurt miteinander verbindet.

Insbesondere kann ein Kühler direkt an einer Rückseite des Querträgers angeordnet sein.

Die Erfindung ist auch auf eine Vorrichtung (z. B. Frontbaugruppe eines Kraftfahrzeugs) gerichtet. Die Vorrichtung weist einen Querträger wie hierin offenbart auf. Die Vorrichtung weist ferner einen Stoßfänger, der, insbesondere direkt, an dem Querträger angebracht ist, auf.

In einer Weiterbildung weist der Stoßfänger einen, insbesondere mit Versteifungsrippen versehenen, Abstützbereich auf, der beabstandet (z. B. bis zu 0,5 cm oder bis zu 1 cm) zu einem Auflagebereich einer Oberseite des Querträgers angeordnet ist und der sich bei einer in Vertikalrichtung auf den Stoßfänger wirkenden Belastung an dem Auflagebereich, insbesondere flächig, abstützt.

Zweckmäßig können der Abstützbereich und der Auflagebereich, insbesondere bezüglich der Form, aneinander angepasst sein, um bspw. eine flächige Abstützung zu gewährleisten.

Insbesondere kann an einer Unterseite des zweiten Gurts zumindest eine Befestigungseinrichtung vorgesehen, z. B. zum Tragen eines Adapters, der beispielsweise ein Abstandsradar trägt.

Die Erfindung ist auch auf eine Vorrichtung (z. B. Rahmenbaugruppe eines Kraftfahrzeugs) gerichtet. Die Vorrichtung weist einen Querträger wie hierin offenbart auf. Die Vorrichtung weist einen ersten Längsträger und einen zweiten Längsträger auf. Die Vorrichtung weist einen ersten Lagerbock auf, der, insbesondere außen, an dem ersten Längsträger angebracht ist und, insbesondere stirnseitig und/oder innenseitig, den Querträger trägt. Die Vorrichtung weist einen zweiten Lagerbock auf, der, insbesondere außen, an dem zweiten Längsträger angebracht ist und, insbesondere stirnseitig und/oder innenseitig, den Querträger trägt. Durch die Verwendung von Lagerböcken können besonders breit bauende Bauteile hinter dem Querträger positioniert werden, z. B. ein besonders breit bauender Kühler. Dies ermöglicht ebenfalls bauraumsparende Anordnungen.

Die Erfindung ist auch auf ein Kraftfahrzeug, insbesondere Nutzfahrzeug (z. B. Omnibus oder Lastkraftwagen) gerichtet. Das Kraftfahrzeug weist einen Querträger wie hierin offenbart oder eine Vorrichtung wie hierin offenbart auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Vorderansicht eines beispielhaften Querträgers eines Kraftfahrzeugs;
- Figur 2: eine schematische perspektivische Vorderansicht des beispielhaften Querträgers;
- Figur 3: eine schematische perspektivische Vorderansicht des beispielhaften Querträgers mit angebautem Geräteträger in gestrichelten Linien;
- Figur 4: eine schematische perspektivische Vorderansicht des beispielhaften Querträgers, der mit weiteren Trägerbauteilen des Kraftfahrzeugs verbunden ist;
- Figur 5: eine schematische Draufsicht auf den beispielhaften Querträger und die weiteren Trägerbauteile von Figur 4;
- Figur 6: eine schematische Rückansicht des beispielhaften Querträgers mit angebautem Frontstoßfänger;
- Figur 7: eine schematische perspektivische Rückansicht des beispielhaften Querträgers mit angebautem Frontstoßfänger von Figur 6;
- Figur 8: eine schematische Rückansicht eines Stoßfängeranbringungsbereichs des beispielhaften Querträgers;
- Figur 9: eine schematische perspektivische Rückansicht des Stoßfängeranbringungsbereich von Figur 8; und
- Figur 10: eine schematische Schnittansicht durch einen Abschnitt des Frontstoßfängers und den beispielhaften Querträger.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

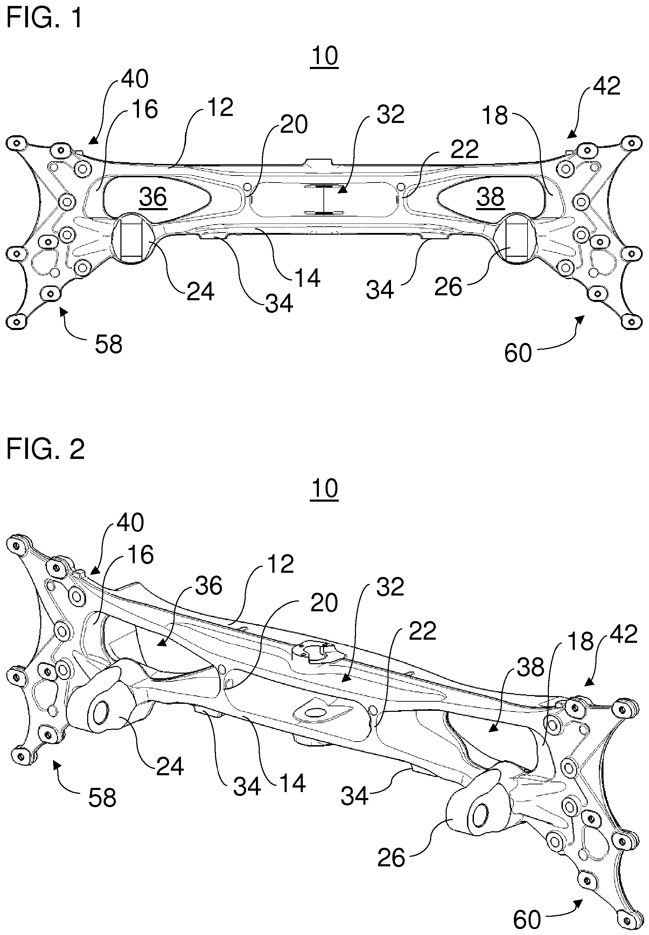

Die Figuren 1 und 2 zeigen einen Querträger 10. Der Querträger 10 kann beispielsweise als ein Frontquerträger eines Kraftfahrzeugs, insbesondere eines Nutzfahrzeugs, verwendet werden. Das Nutzfahrzeug kann beispielsweise ein Lastkraftwagen oder ein Omnibus sein.

Der Querträger 10 ist einstückig-integral ausgebildet. Insbesondere kann der Querträger 10 ein Gussbauteil sein. Es ist allerdings beispielsweise auch möglich, dass der Querträger 10 ein Schmiedebauteil ist oder mittels additiver Fertigung, zum Beispiel durch Lasersintern, hergestellt ist. Wie dargestellt ist, kann der Querträger 10 symmetrisch bezüglich einer Symmetrieebene sein, die den Querträger 10 zentral teilt und senkrecht zu einer Längsachse des Querträgers 10 angeordnet ist.

Der Querträger 10 ist als ein offenes Profil ausgebildet. Der Querträger 10 weist einen Obergurt 12, einen Untergurt 14 und eine Mehrzahl von Stegbereichen 16, 18, 20 und 22 auf.

Der Obergurt 12 und der Untergurt 14 sind über die Mehrzahl von Stegbereichen 16, 18, 20 und 22 miteinander verbunden. An den jeweiligen Längsenden sind der Obergurt 12 und der Untergurt 14 mittels des ersten Außenstegbereichs 16 und mittels des zweiten Außenstegbereichs 18 miteinander verbunden. Der erste Außenstegbereich 16 und der zweite Außenstegbereich 18 sind an gegenüberliegenden Längsenden des Obergurts 12 und des Untergurts 14 angeordnet. Innenliegend von den Außenstegbereichen 16, 18 sind zwei Innenstegbereiche 20, 22 vorgesehen. Die Stegbereiche 16, 18, 20 und 22 verlaufen im Wesentlichen in einer Vertikalrichtung. Die Stegbereiche 16, 18, 20 und 22 gehen jeweils gerundet in den Obergurt 12 und den Untergurt 14 über. Der Obergurt 12, der Untergurt 14 und die Stegbereiche 16, 18, 20 und 22 können als Vollprofile, d. h. nicht hohl, oder mit einer Wabenstruktur (z. B. bei Verwendung eines additiven Fertigungsverfahrens) ausgebildet sein. Eine Oberseite des Obergurts 12 kann konkav gekrümmt sein. Eine Unterseite des Untergurts 14 kann konkav gekrümmt sein.

Der Querträger 10 weist eine erste Schäkelaufnahme 24 und eine zweite Schäkelaufnahme 26 auf.

Die Schäkelaufnahmen 24 und 26 erstrecken sich ausgehend von einer Vorderseite (eine in Vorwärtsfahrtrichtung des Kraftfahrzeugs gewandte Seite) des Querträgers 10. Die Schäkelaufnahmen 24 und 26 stehen an einer Rückseite (eine entgegengesetzt zu der Vorwärtsfahrtrichtung des Kraftfahrzeugs gewandte Seite) des Querträgers 10 nicht über. Die Schäkelaufnahmen 24 und 26 sind bolzenförmig ausgebildet. Die Schäkelaufnahmen 24 und 26 sind integral-einstückig in den Untergurt 14 integriert. Die erste Schäkelaufnahme 24 ist angrenzend an den ersten Außenstegbereich 16 in den Untergurt 14 integriert. Die zweite Schäkelaufnahme 26 ist angrenzend an den zweiten Außenstegbereich 18 in den Untergurt 14 integriert. Die Schäkelaufnahmen 24, 26 sind an entgegengesetzten Längsenden des Untergurts 14 angeordnet.

Im Bereich der Schäkelaufnahmen 24 und 26 ist der Untergurt 14 lokal zu einer Oberseite und einer Unterseite des Untergurts 14 hin aufgeweitet bzw. verdickt. An den freien Enden weisen die Schäkelaufnahmen 24 und 26 Durchgangsöffnungen (z. B. (Bolzen-) Augen) auf, in denen Anbauteile mittels Bolzen befestigt werden können. Die Durchgangsöffnungen der Schäkelaufnahmen 24, 26 können miteinander fluchten. Die Durchgangsöffnungen der Schäkelaufnahmen 24, 26 können sich im Wesentlichen parallel zu einer Längsachse des Querträgers 10 erstrecken.

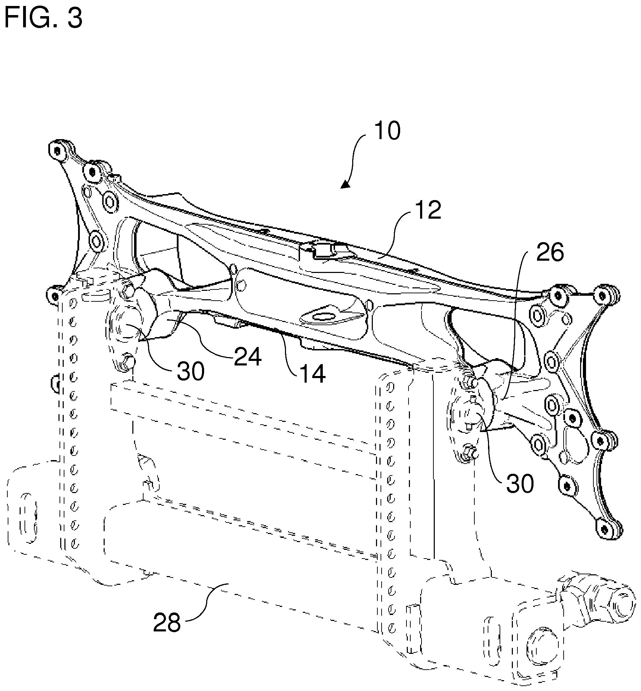

Unter Bezugnahme auf die Figur 3 ist gezeigt, dass beispielsweise ein Geräteträger 28 zum Anbau von weiteren Geräten, zum Beispiel einem Schneepflug, mittels Bolzen 30 in den Durchgangsöffnungen der Schäkelaufnahmen 24 und 26 angebracht werden kann. Es ist auch möglich, andere Anbauteile, wie beispielsweise eine Anbauplatte über Bolzen oder Schäkel über die entsprechenden Schäkelbolzen, in den Durchgangsöffnungen der Schäkelaufnahmen 24 und 26 anzubringen.

Unter erneuter Bezugnahme auf die Figuren 1 und 2 ist dargestellt, dass der Querträger 10 ferner ein Zugmaul (Fangmaul) 32 aufweisen kann. Das Zugmaul 32 ist integral-einstückig zwischen den innenliegenden Stegbereichen 20, 22 in dem Querträger 10 ausgebildet. Beispielsweise kann in dem Zugmaul 32 eine Anhängerdeichsel oder ein Seil mittels eines in dem Zugmaul 32 befestigten Vorsteckbolzens (nicht dargestellt) lösbar angebracht werden.

An einer Unterseite (eine in Richtung zu dem Boden gewandte Seite) des Untergurts 14 sind weitere Befestigungseinrichtungen 34 vorgesehen. In den als Vorsprünge mit integrierten Aufnahmen (zum Beispiel Bolzenaufnahmen) (nicht dargestellt) ausgebildeten Befestigungseinrichtungen 34 können beispielsweise Befestigungsbolzen (nicht dargestellt) angebracht sein. An den Befestigungsbolzen kann beispielsweise ein Adapter (nicht dargestellt) befestigt werden, der bspw. ein Abstandsradar tragen kann. Die Befestigungseinrichtungen 34 sind jeweils zwischen einem Außenstegbereich 16 oder 18 und einem Innenstegbereich 20 oder 22 angeordnet.

Der Querträger 10 weist eine erste Kühlluftöffnung 36 und eine zweite Kühlluftöffnung 38 auf. Im Einbauzustand kann bezogen auf eine Vorwärtsfahrtrichtung des Kraftfahrzeugs hinter dem Querträger 10 ein Kühler des Kraftfahrzeugs angeordnet sein. Mittels der Kühlluftöffnungen 36, 38 kann Kühlluft zu dem Kühler zugeführt werden. Die erste Kühlluftöffnung 36 ist zwischen dem ersten Außenstegbereich 16, dem Untergurt 14, dem ersten Innenstegbereich 20 und dem Obergurt 12 gebildet. Die zweite Kühlluftöffnung 38 ist zwischen dem zweiten Außenstegbereich 18, dem Obergurt 12, dem zweiten Innenstegbereich 22 und dem Untergurt 14 gebildet. Die erste Schäkelaufnahme 24 ist unterhalb der ersten Kühlluftöffnung 36 angeordnet. Die zweite Schäkelaufnahme 26 ist unterhalb der zweiten Kühlluftöffnung 38 angeordnet. Im Bereich der Schäkelaufnahmen 24, 26 können die Kühlluftöffnungen 36, 38 nach innen eingedellt sein. Die Kühlluftöffnungen 36, 38 weisen eine ungefähre Tropfenform auf, wobei jeweils eine Tropfenspitze in einer Richtung zu einem Mittelbereich (zum Beispiel dem Zugmaul 32) des Querträgers 10 gerichtet ist.

Der Querträger 10 weist einen ersten Verbindungsbereich 40 und einen zweiten Verbindungsbereich 42 auf. Die Verbindungsbereiche 40, 42 sind außenliegend von den Längsenden des Obergurts 12 und des Untergurts 14 angeordnet. Mittels der Verbindungsbereiche 40, 42 kann der Querträger 10 an Kombinationsböcken beispielsweise mittels Schrauben lösbar angebracht werden.

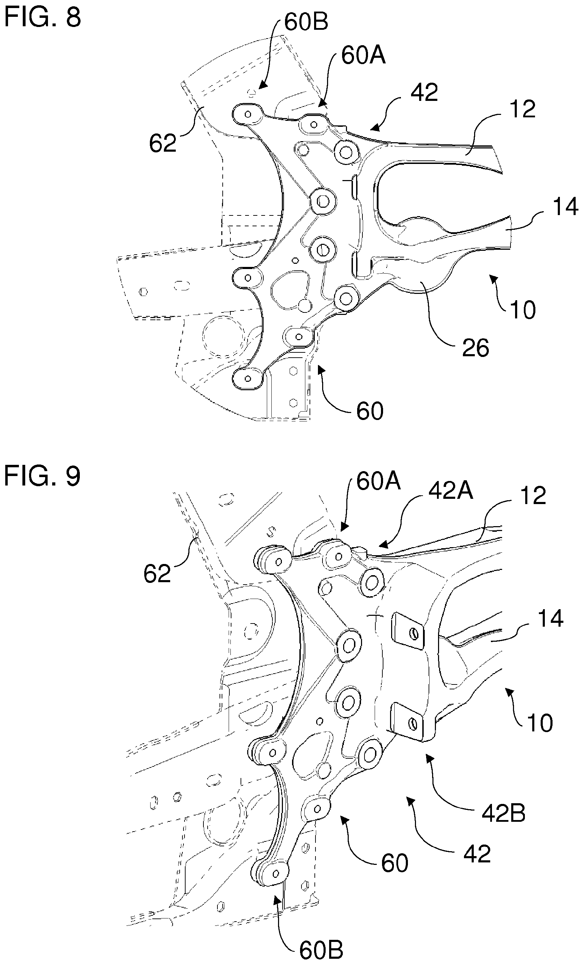

Die Figur 9 zeigt stellvertretend beispielhaft den zweiten Verbindungsbereich 42 im Detail. Der zweite Verbindungsbereich 42 weist eine Mehrzahl von Durchgangsöffnungen für Schrauben auf. Der Verbindungsbereich 42 weist einen ersten Abschnitt 42A und einen zweiten Abschnitt 42B auf. Der erste Abschnitt 42A ist außenliegend von dem zweiten Außenstegbereich 42 angeordnet. Der zweite Abschnitt 42B ist in den zweiten Außenstegbereich 18 integriert. In der dargestellten Ausführungsform weist der erste Abschnitt 42A vier Durchgangsöffnungen für Schrauben auf. Der zweite Abschnitt 42B weist zwei Durchgangsöffnungen für Schrauben auf. Es ist auch möglich, jeweils mehr oder weniger Durchgangsöffnungen vorzusehen. Die Abschnitte 42A, 42B weisen jeweils Abstützflächen zur Anlage an einen Lagerbock auf. Die Abstützflächen umgeben jeweils die Austritte der Durchgangsöffnungen. Die Abstützflächen der Abschnitte 42A, 42B sind angewinkelt, insbesondere rechtwinklig, zueinander ausgerichtet. Die Verbindungsbereiche 40, 42 können spiegelsymmetrisch zueinander ausgebildet sein. Die angewinkelten Abstützflächen ermöglichen eine optimierte Krafteinleitung in den Lagerbock.

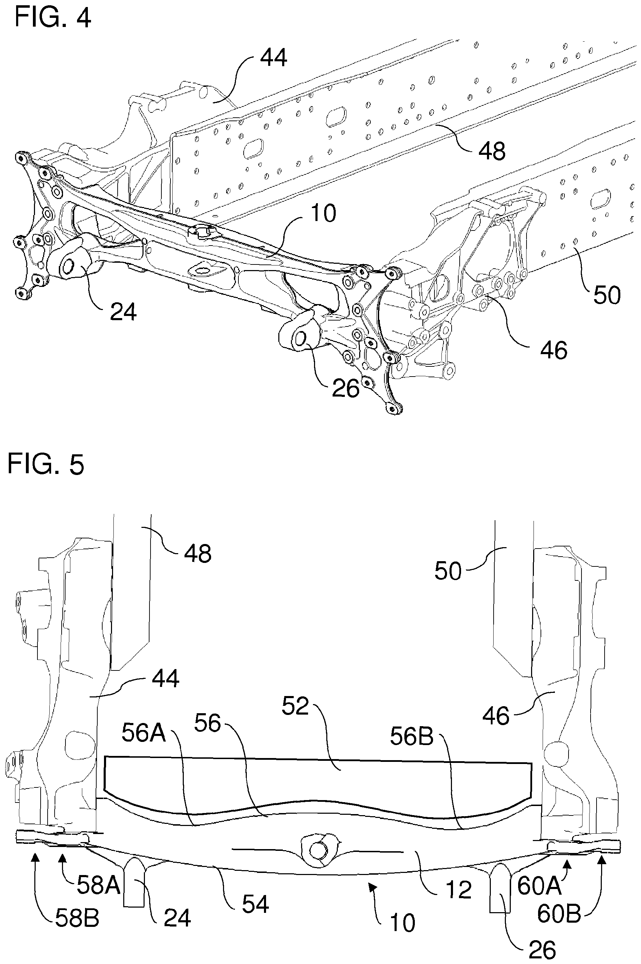

Die Figuren 4 und 5 zeigen, wie die Verbindungsbereiche 40, 42 eine Anbringung des Querträgers 10 an Lagerböcken 44, 46 ermöglichen. Die Lagerböcke 44, 46 sind wiederum an Längsträgern 48, 50 befestigt. Die Lagerböcke 44, 46 sind als Kombinationsblöcke ausgebildet. Die Lagerböcke 44, 46 können weitere Fahrzeugbauteile tragen, zum Beispiel eine Crashkonsole, ein Lenkgetriebe, eine Anbindung zum Fahrwerk, eine Anbindung zum Frontunterfahrschutz usw. Durch die Verwendung der Lagerböcke 44, 46 kann ein besonders großer Raum hinter dem Querträger 10 zur Anordnung von Bauteilen, zum Beispiel einem Kühler 52 (nur schematisch in Figur 5 dargestellt), genutzt werden, insbesondere verglichen mit einer Lösung, bei der ein Querträger direkt an den Längsträgern angebracht ist.

In der Figur 5 ist ferner ersichtlich, dass eine in der Vorwärtsfahrtrichtung des Kraftfahrzeugs gewandte Vorderseite 54 des Obergurts 12 konvex gekrümmt ist. Dies ermöglicht eine verbesserte Anbringung eines ebenfalls gekrümmten Frontstoßfängers an den Querträger 10. Die bogenförmige Krümmung kann beispielsweise aufgrund einer verbesserten Aerodynamik vorgesehen sein.

Zusätzlich ist in der Figur 5 ersichtlich, dass eine entgegengesetzt zu der Vorwärtsfahrtrichtung des Kraftfahrzeugs gewandte Rückseite 56 des Obergurts 12 wellenförmig, insbesondere Doppel-S-förmig gekrümmt ist. Die Rückseite 56 weist damit zwei konkave Aussparungen 56A und 56B auf. Die Aussparungen 56A und 56B können beispielsweise dazu genutzt werden, den Kühler 52 noch näher an den Querträger 10 zu positionieren. Beispielsweise kann im Bereich mindestens einer der Aussparungen 56A, 56B eine sogenannte Kühlerpatrone des Kühlers 52 angeordnet sein.

Es ist auch möglich, dass, alternativ oder zusätzlich, der Untergurt 14 an dessen Vorderseite konvex gekrümmt und/oder an dessen Rückseite wellenförmig ausgebildet ist.

Unter erneuter Bezugnahme auf die Figuren 1 und 2 ist dargestellt, dass der Querträger 10 Stoßfängeranbringungsbereiche 58, 60 aufweist. Der erste Stoßfängeranbringungsbereich 58 ist außenliegend von dem ersten Verbindungsbereich 40 angeordnet. Der zweite Stoßfängeranbringungsbereich 60 ist außenliegend von dem zweiten Verbindungsbereich 42 angeordnet. Die Stoßfängeranbringungsbereiche 58, 60 bilden jeweils die Längsenden des Querträgers 10. Mittels der Stoßfängeranbringungsbereiche 58, 60 kann ein Stoßfänger des Kraftfahrzeugs direkt an den Querträger 10 montiert werden, ohne dass beispielsweise Adapter dazwischen vorgesehen werden müssen.

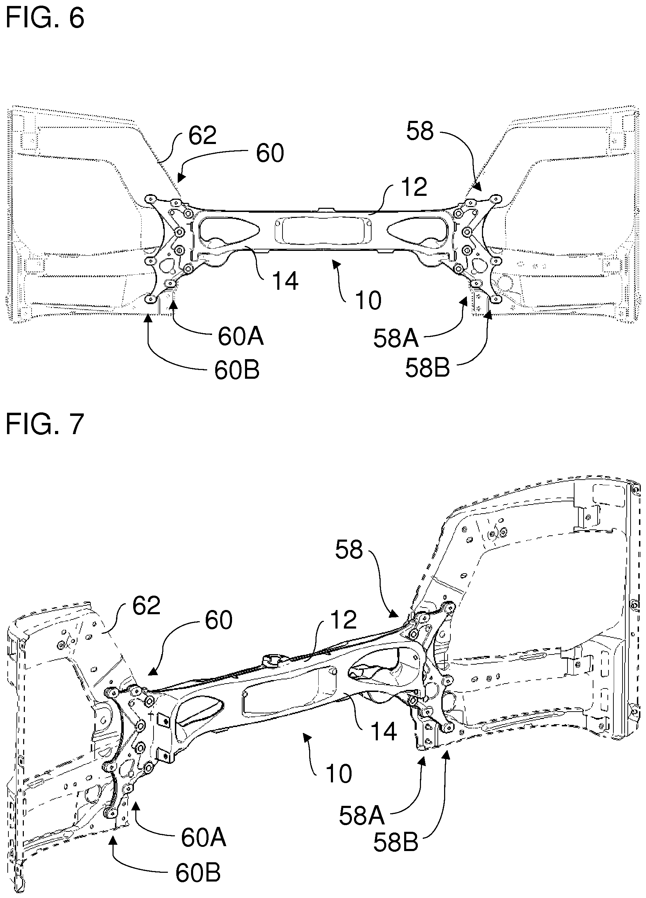

Die Figuren 6 bis 9 zeigen den Querträger 10 mit an die Stoßfängeranbringungsbereiche 58, 60 angebrachtem Stoßfänger 62. Der Stoßfänger 62 ist als Frontstoßfänger ausgebildet. Die Stoßfängeranbringungsbereiche 58 und 60 weisen jeweils zwei Anbringungsabschnitte 58A, 58B bzw. 60A, 60B mit Durchgangsöffnungen für Schrauben auf. Die Anbringungsabschnitte 58A und 58B sind in einer Vorwärtsfahrtrichtung des Kraftfahrzeugs versetzt zueinander angeordnet. Dies gilt ebenso für die Anbringungsabschnitte 60A und 60B. Insbesondere sind jeweils die äußeren Anbringungsabschnitte 58B und 60B zurückversetzt von den inneren Anbringungsabschnitten 58A und 60A (siehe insbesondere Figur 5). Dies kann dabei helfen, den Frontstoßfänger besonders aerodynamische gebogen auszubilden und dennoch eine gute Montierbarkeit zu gewährleisten.

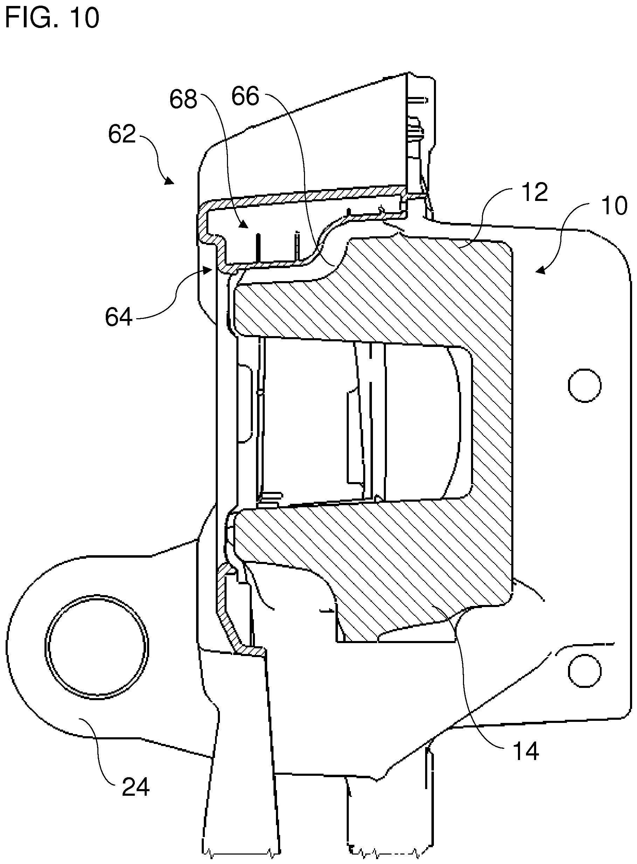

Die Figur 10 zeigt einen Querschnitt durch den Querträger 10 und den Stoßfänger 62. Wie dargestellt ist, weist der Stoßfänger 62 einen Abstützbereich 64 auf. Der Abstützbereich 64 ist beabstandet zu einem Auflagebereich 66 des Obergurts 12 angeordnet. Der Abstützbereich 64 ist an einer zum Boden hin gewandten Fläche des Stoßfängers 62 angeordnet. Der Auflagebereich 66 ist an einer Oberseite des Obergurts 12 vorgesehen. Ein Spalt zwischen dem Abstützbereich 64 und dem Auflagebereich 66 kann beispielsweise zwischen 0,1 mm und 10 mm, insbesondere kleiner als 5 mm, zum Beispiel zwischen 3 mm und 4 mm, sein. Die einander zugewandten Konturen des Auflagebereichs 66 und des Abstützbereich 64 sind aneinander angepasst. Wird der Stoßfänger 62 in einer Vertikalrichtung belastet, zum Beispiel weil sich eine Person an dem Stoßfänger 62 abstützt oder sich auf den Stoßfänger 62 stellt, wird der Spalt zwischen dem Abstützbereiches 64 dem Auflagebereich 66 überwunden. Der Stoßfänger 62 bewegt sich in einer Vertikalrichtung nach unten, sodass sich der Abstützbereich 64 an den Auflagebereich 66 anlegt. Damit kann die vertikale Belastung auf den Stoßfänger 62 von dem Querträger 10 abgestützt werden. Der Abstützbereich 64 kann Verstärkungsrippen 68 aufweisen, wie dargestellt ist.

Die Erfindung ist nicht auf die vorstehend beschriebenen bevorzugten Ausführungsbeispiele beschränkt und wird durch die Ansprüche definiert.

### Bezugszeichenliste

- 10: Querträger
- 12: Obergurt
- 14: Untergurt
- 16: Erster Außenstegbereich
- 18: Zweiter Außenstegbereich
- 20: Erster Innenstegbereich
- 22: Zweiter Innenstegbereich
- 24: Erste Schäkelaufnahme
- 26: Zweite Schäkelaufnahme
- 28: Geräteträger
- 30: Bolzen
- 32: Zugmaul
- 34: Befestigungseinrichtung
- 36: Erste Kühlluftöffnung
- 38: Zweite Kühlluftöffnung
- 40: Erster Verbindungsbereich
- 42: Zweiter Verbindungsbereich
- 42A: Erster Abschnitt
- 42B: Zweiter Abschnitt
- 44: Erster Lagerbock
- 46: Zweiter Lagerbock
- 48: Erster Längsträger
- 50: Zweiter Längsträger
- 52: Kühler
- 54: Vorderseite
- 56: Rückseite
- 56A: Erste Aussparung
- 56B: Zweite Aussparung
- 58: Erster Stoßfängeranbringungsbereich
- 58A: Innenliegender Anbringungsabschnitt
- 58B: Außenliegender Anbringungsabschnitt
- 60: Zweiter Stoßfängeranbringungsbereich
- 60A: Innenliegender Anbringungsabschnitt
- 60B: Außenliegender Anbringungsabschnitt
- 62: Stoßfänger
- 64: Abstützbereich
- 66: Auflagebereich
- 68: Versteifungsrippen

## Patentansprüche

1. Querträger (10), insbesondere Frontquerträger, für ein Kraftfahrzeug, insbesondere Nutzfahrzeug, aufweisend:
einen ersten Gurt (12), insbesondere Obergurt;
einen zweiten Gurt (14), insbesondere Untergurt;
eine erste Schäkelaufnahme (24) zur lösbaren Anbindung eines Anbauteils (28) an den Querträger (10); und
eine zweite Schäkelaufnahme (26) zur lösbaren Anbindung eines Anbauteils (28) an den Querträger (10),
wobei die erste Schäkelaufnahme (24) und die zweite Schäkelaufnahme (26) integral-einstückig in den ersten Gurt (12) und/oder den zweiten Gurt (14) integriert sind,
**dadurch gekennzeichnet, dass** sich die erste Schäkelaufnahme (24) und die zweite Schäkelaufnahme (26) ausgehend von dem ersten Gurt (12) und/oder dem zweiten Gurt (14) erstrecken.

2. Querträger (10) nach Anspruch 1, wobei:
der erste Gurt (12) und/oder der zweite Gurt (14) sich am Integrationsbereich der ersten Schäkelaufnahme (24) und am Integrationsbereich der zweiten Schäkelaufnahme (26), insbesondere oberseitig und unterseitig, aufweitet; und/oder
die erste Schäkelaufnahme (24) und die zweite Schäkelaufnahme (26) integral-einstückig an entgegensetzten Längsenden des ersten Gurts (12) und/oder des zweiten Gurts (14) integriert sind.

3. Querträger (10) nach Anspruch 1 oder Anspruch 2, wobei:
der erste Gurt (12) und der zweite Gurt (14) an deren ersten Längsenden von einem ersten Außenstegbereich (16) und an deren entgegengesetzten zweiten Längsenden von einem zweiten Außenstegbereich (18) verbunden sind; und
der erste Außenstegbereich (16) außenliegend von und direkt anschließend an die erste Schäkelaufnahme (24) angeordnet ist; und/oder
der zweite Außenstegbereich (18) außenliegend von und direkt anschließend an die zweite Schäkelaufnahme (26) angeordnet ist.

4. Querträger (10) nach einem der vorherigen Ansprüche, ferner aufweisend:
einen ersten Stoßfängeranbringungsbereich (58) und optional einen zweiten Stoßfängeranbringungsbereich (60) zur, insbesondere direkten, Anbringung eines Stoßfängers (62) an den Querträger (10); und/oder
einen ersten Verbindungsbereich (40) zur Verbindung des Querträgers (10) mit einem ersten Lagerbock (44) zur Anbindung an einen ersten Längsträger (48) und optional einen zweiten Verbindungsbereich (42) zur Verbindung des Querträgers (10) mit einem zweiten Lagerbock (46) zur Anbindung an einen zweiten Längsträger (50).

5. Querträger (10) nach Anspruch 4, wobei:
die erste Schäkelaufnahme (24) und die zweite Schäkelaufnahme (26) separat zu dem ersten Stoßfängeranbringungsbereich (58), dem zweiten Stoßfängeranbringungsbereich (60), dem ersten Verbindungsbereich (40) und/oder dem zweiten Verbindungsbereich (42) ausgebildet sind; und/oder
der erste Stoßfängeranbringungsbereich (58) außenliegend von dem ersten Außenstegbereich (16) und/oder dem ersten Verbindungsbereich (40) angeordnet ist; und/oder
der zweite Stoßfängeranbringungsbereich (60) außenliegend von dem zweiten Außenstegbereich (18) und/oder dem zweiten Verbindungsbereich (42) angeordnet ist; und/oder
der erste Verbindungsbereich (40) innenliegend von dem ersten Stoßfängeranbringungsbereich (58) angeordnet und/oder zumindest teilweise in den ersten Außenstegbereich (16) integriert ist; und/oder
der zweite Verbindungsbereich (42) innenliegend von dem zweiten Stoßfängeranbringungsbereich (60) angeordnet und/oder zumindest teilweise in den zweiten Außenstegbereich (18) integriert ist.

6. Querträger (10) nach Anspruch 4 oder Anspruch 5, wobei:
der erste Verbindungsbereich (40) und/oder der zweite Verbindungsbereich (42) mindestens eine erste Abstützfläche zum Abstützen an dem jeweiligen Lagerbock (44, 46) und mindestens eine zweite Abstützfläche zum Abstützen an dem jeweiligen Lagerbock (44, 46) aufweist und die mindestens eine erste Abstützfläche und die mindestens eine zweite Abstützfläche zueinander angewinkelt, insbesondere spitzwinkelig, rechtwinklig oder stumpfwinklig, sind; und/oder
der erste Stoßfängeranbringungsbereich (58) und/oder der zweite Stoßfängeranbringungsbereich (60) einen innenliegenden Anbringungsabschnitt (58A, 60A) und einen außenliegenden Anbringungsabschnitt (58B, 60B) aufweist, wobei der außenliegende Anbringungsabschnitt (58B, 60B) bezüglich des innenliegenden Anbringungsabschnitts (58A, 60A) zurückversetzt ist.

7. Querträger (10) nach einem der vorherigen Ansprüche, ferner aufweisend:
eine erste Durchgangsöffnung, insbesondere Kühlluftöffnung (36), die zwischen dem ersten Gurt (12) und dem zweiten Gurt (14) angeordnet ist;
und optional:
eine zweite Durchgangsöffnung, insbesondere Kühlluftöffnung (38), die zwischen dem ersten Gurt (12) und dem zweiten Gurt (14) angeordnet ist.

8. Querträger (10) nach einem der vorherigen Ansprüche, wobei:
die erste Durchgangsöffnung (36) und/oder die zweite Durchgangsöffnung (38) im Wesentlichen tropfenförmig ausgebildet ist, insbesondere mit einer zum Zentrum des Querträgers (10) hin gerichteten Tropfenspitze.

9. Querträger (10) nach einem der vorherigen Ansprüche, wobei:
ein Auflagebereich (66) zur Abstützung eines Stoßfängers (62) an einer Oberseite des ersten Gurts (12) angeordnet ist.

10. Querträger (10) nach einem der vorherigen Ansprüche, wobei:
eine Oberseite des ersten Gurts (12), insbesondere konkav, gekrümmt ist; und/oder
eine Unterseite des zweiten Gurts (14), insbesondere konkav, gekrümmt ist; und/oder
eine Vorderseite des ersten Gurts (12) und/oder eine Vorderseite des zweiten Gurts (14), insbesondere konvex, gekrümmt ist; und/oder
eine Rückseite des ersten Gurts (12) und/oder eine Rückseite des zweiten Gurts (14) wellenförmig, insbesondere Doppel-S-förmig, ist; und/oder
eine Rückseite des ersten Gurts (12) und/oder eine Rückseite des zweiten Gurts (14) zumindest eine, insbesondere konkave, Aussparung (56A, 56B) aufweist.

11. Querträger (10) nach einem der vorherigen Ansprüche, wobei:
der Querträger (10) integral-einstückig ausgebildet ist; und/oder
der Querträger (10) gegossen ist, geschmiedet ist oder mittels additiver Fertigung, insbesondere mittels Lasersintern, hergestellt ist; und/oder
der Querträger (10) ferner mindestens einen Stegbereich (16, 18, 20, 22) aufweist, der den ersten Gurts (14) und den zweiten Gurts (12) miteinander verbindet.

12. Vorrichtung, aufweisend:
einen Querträger (10) nach einem der vorherigen Ansprüche; und
einen Stoßfänger (62), der, insbesondere direkt, an dem Querträger (10) angebracht ist.

13. Vorrichtung nach Anspruch 12, wobei:
der Stoßfänger (62) einen, insbesondere mit Versteifungsrippen (68) versehenen, Abstützbereich (64) aufweist, der beabstandet zu einem Auflagebereich (66) einer Oberseite des Querträgers (10) angeordnet ist und der sich bei einer in Vertikalrichtung auf den Stoßfänger (62) wirkenden Belastung an dem Auflagebereich (66), insbesondere flächig, abstützt.

14. Vorrichtung aufweisend:
einen Querträger (10) nach einem Ansprüche 1 bis 11; und
einen ersten Längsträger (48);
einen zweiten Längsträger (50);
einen ersten Lagerbock (44), der, insbesondere außen, an dem ersten Längsträger (48) angebracht ist und, insbesondere stirnseitig und/oder innenseitig, den Querträger (10) trägt; und
einen zweiten Lagerbock (46), der, insbesondere außen, an dem zweiten Längsträger (50) angebracht ist und, insbesondere stirnseitig und/oder innenseitig, den Querträger (10) trägt.

15. Kraftfahrzeug, insbesondere Nutzfahrzeug, mit einem Querträger (10) nach einem der Ansprüche 1 bis 11 oder einer Vorrichtung nach einem der Ansprüche 12 bis 14.

## Claims

1. Crossmember (10), in particular front crossmember, for a motor vehicle, in particular a utility vehicle, comprising:
a first chord (12), in particular an upper chord;
a second chord (14), in particular a lower chord;
a first shackle receiver (24) for the releasable connection of an attachment (28) to the crossmember (10); and
a second shackle receiver (26) for the releasable connection of an attachment (28) to the crossmember (10);
wherein the first shackle receiver (24) and the second shackle receiver (26) are integrated in one piece in the first chord (12) and/or the second chord (14) in an integral manner,
**characterized in that** the first shackle receiver (24) and the second shackle receiver (26) extend starting from the first chord (12) and/or the second chord (14).

2. Crossmember (10) according to Claim 1, wherein:
the first chord (12) and/or the second chord (14) are widened at the integration region of the first shackle receiver (24) and at the integration region of the second shackle receiver (26), in particular on the upper face and lower face; and/or
the first shackle receiver (24) and the second shackle receiver (26) are integrated in one piece at opposing longitudinal ends of the first chord (12) and/or the second chord (14) in an integral manner.

3. Crossmember (10) according to Claim 1 or Claim 2, wherein:
the first chord (12) and the second chord (14) are connected at the first longitudinal ends thereof by a first outer web region (16) and at the opposing second longitudinal ends thereof by a second outer web region (18); and
the first outer web region (16) is arranged so as to be externally located relative to and directly adjoining the first shackle receiver (24); and/or
the second outer web region (18) is arranged so as to be externally located relative to and directly adjoining the second shackle receiver (26).

4. Crossmember (10) according to one of the preceding claims, further comprising:
a first bumper attachment region (58) and optionally a second bumper attachment region (60), in particular, for the direct attachment of a bumper (62) to the crossmember (10); and/or
a first connecting region (40) for connecting the crossmember (10) to a first bearing block (44) for attaching to a first longitudinal member (48) and optionally a second connecting region (42) for connecting the crossmember (10) to a second bearing block (46) for attaching to a second longitudinal member (50).

5. Crossmember (10) according to Claim 4, wherein:
the first shackle receiver (24) and the second shackle receiver (26) are configured separately from the first bumper attachment region (58), the second bumper attachment region (60), the first connecting region (40) and/or the second connecting region (42); and/or
the first bumper attachment region (58) is arranged so as to be externally located relative to the first outer web region (16) and/or the first connecting region (40); and/or
the second bumper attachment region (60) is arranged so as to be externally located relative to the second outer web region (18) and/or the second connecting region (42); and/or
the first connecting region (40) is arranged so as to be internally located relative to the first bumper attachment region (58) and/or at least partially integrated in the first outer web region (16); and/or
the second connecting region (42) is arranged so as to be internally located relative to the second bumper attachment region (60) and/or at least partially integrated in the second outer web region (18).

6. Crossmember (10) according to Claim 4 or Claim 5, wherein:
the first connecting region (40) and/or the second connecting region (42) has at least one first support surface in order to be supported on the respective bearing block (44, 46) and at least one second support surface in order to be supported on the respective bearing block (44, 46), and the at least one first support surface and the at least one second support surface are angled relative to one another, in particular at an acute angle, a right angle or an obtuse angle; and/or
the first bumper attachment region (58) and/or the second bumper attachment region (60) has an internally located attachment portion (58A, 60A) and an externally located attachment portion (58B, 60B), wherein the externally located attachment portion (58B, 60B) is set back relative to the internally located attachment portion (58A, 60A).

7. Crossmember (10) according to one of the preceding claims, further comprising:
a first through-opening, in particular a cool air opening (36), which is arranged between the first chord (12) and the second chord (14);
and optionally:
a second through-opening, in particular a cool air opening (38), which is arranged between the first chord (12) and the second chord (14).

8. Crossmember (10) according to one of the preceding claims, wherein:
the first through-opening (36) and/or the second through-opening (38) is configured to be substantially droplet-shaped, in particular with a droplet tip oriented towards the centre of the crossmember (10).

9. Crossmember (10) according to one of the preceding claims, wherein:
a bearing region (66) is arranged for supporting a bumper (62) on an upper face of the first chord (12).

10. Crossmember (10) according to one of the preceding claims, wherein:
an upper face of the first chord (12) is curved, in particular, in a concave manner; and/or
a lower face of the second chord (14) is curved, in particular, in a concave manner; and/or
a front face of the first chord (12) and/or a front face of the second chord (14) is curved, in particular, in a convex manner; and/or
a rear face of the first chord (12) and/or a rear face of the second chord (14) is wave-shaped, in particular double S-shaped; and/or
a rear face of the first chord (12) and/or a rear face of the second chord (14) comprises at least one, in particular concave, recess (56A, 56B).

11. Crossmember (10) according to one of the preceding claims, wherein:
the crossmember (10) is configured in one piece in an integral manner; and/or
the crossmember (10) is cast, forged or produced by means of additive manufacturing, in particular by means of laser sintering; and/or
the crossmember (10) also has at least one web region (16, 18, 20, 22) which connects together the first chord (14) and the second chord (12).

12. Device, comprising:
a crossmember (10) according to one of the preceding claims; and
a bumper (62) which, in particular, is attached directly to the crossmember (10).

13. Device according to Claim 12, wherein:
the bumper (62) has a support region (64) which is provided, in particular, with reinforcing ribs (68), which is arranged spaced apart from a bearing region (66) of an upper face of the crossmember (10) and which when a load acts in the vertical direction on the bumper (62) is supported, in particular, in a planar manner on the bearing region (66).

14. Device comprising:
a crossmember (10) according to one of Claims 1 to 11; and
a first longitudinal member (48);
a second longitudinal member (50);
a first bearing block (44) which, in particular, is attached externally to the first longitudinal member (48) and, in particular, bears the crossmember (10) on the front face and/or inner face; and
a second bearing block (46) which, in particular, is attached externally to the second longitudinal member (50) and, in particular, bears the crossmember (10) on the front face and/or inner face.

15. Motor vehicle, in particular a utility vehicle, having a crossmember (10) according to one of Claims 1 to 11 or a device according to one of Claims 12 to 14.

## Revendications

1. Traverse (10), en particulier traverse avant, pour un véhicule automobile, en particulier un véhicule utilitaire, comprenant :
une première membrure (12), en particulier une membrure supérieure ;
une deuxième membrure (14), en particulier une membrure inférieure ;
un premier logement de manille (24) servant à la liaison libérable d'une pièce rapportée (28) à la traverse (10) ; et
un deuxième logement de manille (26) servant à la liaison libérable d'une pièce rapportée (28) à la traverse (10), dans laquelle le premier logement de manille (24) et le deuxième logement de manille (26) sont intégrés intégralement d'une seule pièce dans la première membrure (12) et/ou la deuxième membrure (14),
**caractérisée en ce que** le premier logement de manille (24) et le deuxième logement de manille (26) s'étendent à partir de la première membrure (12) et/ou de la deuxième membrure (14).

2. Traverse (10) selon la revendication 1, dans laquelle :
la première membrure (12) et/ou la deuxième membrure (14) s'élargissent au niveau de la région d'intégration du premier logement de manille (24) et au niveau de la région d'intégration du deuxième logement de manille (26), en particulier du côté supérieur et du côté inférieur ; et/ou
le premier logement de manille (24) et le deuxième logement de manille (26) sont intégrés intégralement d'une seule pièce au niveau d'extrémités longitudinales opposées de la première membrure (12) et/ou de la deuxième membrure (14).

3. Traverse (10) selon la revendication 1 ou la revendication 2, dans laquelle :
la première membrure (12) et la deuxième membrure (14) sont connectées au niveau de leurs premières extrémités longitudinales par une première région d'âme extérieure (16) et au niveau de leurs deuxièmes extrémités longitudinales opposées par une deuxième région d'âme extérieure (18) ; et
la première région d'âme extérieure (16) est disposée à l'extérieur à partir du premier logement de manille (24) et de manière immédiatement adjacente à celui-ci ; et/ou la deuxième région d'âme extérieure (18) est disposée à l'extérieur à partir du deuxième logement de manille (26) et de manière immédiatement adjacente à celui-ci.

4. Traverse (10) selon l'une des revendications précédentes, comprenant en outre :
une première région de liaison de pare-chocs (58) et éventuellement une deuxième région de liaison de pare-chocs (60) servant à la liaison, en particulier directe, d'un pare-chocs (62) à la traverse (10) ; et/ou une première région de connexion (40) servant à la connexion de la traverse (10) à un premier support de palier (44) servant à la liaison à un premier longeron (48) et éventuellement une deuxième région de connexion (42) servant à la connexion de la traverse (10) à un deuxième support de palier (46) servant à la liaison à un deuxième longeron (50).

5. Traverse (10) selon la revendication 4, dans laquelle :
le premier logement de manille (24) et le deuxième logement de manille (26) sont réalisés séparément par rapport à la première région de liaison de pare-chocs (58), la deuxième région de liaison de pare-chocs (60), la première région de connexion (40) et/ou la deuxième région de connexion (42) ; et/ou
la première région de liaison de pare-chocs (58) est disposée à l'extérieur à partir de la première région d'âme extérieure (16) et/ou de la première région de connexion (40) ; et/ou
la deuxième région de liaison de pare-chocs (60) est disposée à l'extérieur à partir de la deuxième région d'âme extérieure (18) et/ou de la deuxième région de connexion (42) ; et/ou
la première région de connexion (40) est disposée à l'intérieur à partir de la première région de liaison de pare-chocs (58) et/ou est intégrée au moins partiellement dans la première région d'âme extérieure (16) ; et/ou la deuxième région de connexion (42) est disposée à l'intérieur à partir de la deuxième région de liaison de pare-chocs (60) et/ou est intégrée au moins partiellement dans la deuxième région d'âme extérieure (18).

6. Traverse (10) selon la revendication 4 ou la revendication 5, dans laquelle :
la première région de connexion (40) et/ou la deuxième région de connexion (42) comprennent au moins une première surface d'appui servant à l'appui sur le support de palier (44, 46) respectif et au moins une deuxième surface d'appui servant à l'appui sur le support de palier (44, 46) respectif et l'au moins une première surface d'appui et l'au moins une deuxième surface d'appui sont inclinées l'une par rapport à l'autre, en particulier forment un angle aigu, un angle droit ou un angle obtus l'une par rapport à l'autre ; et/ou la première région de liaison de pare-chocs (58) et/ou la deuxième région de liaison de pare-chocs (60) comprennent une partie de liaison intérieure (58A, 60A) et une partie de liaison extérieure (58B, 60B), dans laquelle la partie de liaison extérieure (58B, 60B) est en retrait par rapport à la partie de liaison intérieure (58A, 60A).

7. Traverse (10) selon l'une des revendications précédentes, comprenant en outre :
une première ouverture traversante, en particulier une ouverture d'air de refroidissement (36), qui est disposée entre la première membrure (12) et la deuxième membrure (14) ;
et éventuellement :
une deuxième ouverture traversante, en particulier une ouverture d'air de refroidissement (38), qui est disposée entre la première membrure (12) et la deuxième membrure (14) .

8. Traverse (10) selon l'une des revendications précédentes, dans laquelle :
la première ouverture traversante (36) et/ou la deuxième ouverture traversante (38) sont réalisées sensiblement en forme de goutte, en particulier avec une pointe de goutte orientée vers le centre de la traverse (10).

9. Traverse (10) selon l'une des revendications précédentes, dans laquelle :
une région de support (66) servant à l'appui d'un pare-chocs (62) est disposée au niveau d'un côté supérieur de la première membrure (12).

10. Traverse (10) selon l'une des revendications précédentes, dans laquelle :
un côté supérieur de la première membrure (12) est courbé, en particulier de manière concave ; et/ou
un côté inférieur de la deuxième membrure (14) est courbé, en particulier de manière concave ; et/ou
un côté avant de la première membrure (12) et/ou un côté avant de la deuxième membrure (14) sont courbés, en particulier de manière convexe ; et/ou
un côté arrière de la première membrure (12) et/ou un côté arrière de la deuxième membrure (14) sont ondulés, en particulier en forme de double S ; et/ou
un côté arrière de la première membrure (12) et/ou un côté arrière de la deuxième membrure (14) comprennent au moins un évidement (56A, 56B) en particulier concave.

11. Traverse (10) selon l'une des revendications précédentes, dans laquelle :
la traverse (10) est réalisée intégralement d'une seule pièce ; et/ou
la traverse (10) est coulée, est forgée ou est produite par fabrication additive, en particulier par frittage au laser ; et/ou
la traverse (10) comprend en outre au moins une région d'âme (16, 18, 20, 22) qui relie l'une à l'autre la première membrure (14) et la deuxième membrure (12).

12. Dispositif, comprenant :
une traverse (10) selon l'une des revendications précédentes ; et
un pare-chocs (62) qui est monté, en particulier directement, sur la traverse (10).

13. Dispositif selon la revendication 12, dans lequel :
le pare-chocs (62) comprend une région d'appui (64) en particulier dotée de nervures de raidissement (68), laquelle région d'appui est disposée de manière espacée d'une région de support (66) d'un côté supérieur de la traverse (10) et laquelle s'appuie en particulier à plat sur la région de support (66) en cas de sollicitation agissant dans la direction verticale sur le pare-chocs (62) .

14. Dispositif comprenant :
une traverse (10) selon l'une des revendications 1 à 11 ; et
un premier longeron (48) ;
un deuxième longeron (50) ;
un premier support de palier (44), lequel est monté, en particulier à l'extérieur, sur le premier longeron (48), et supporte la traverse (10) en particulier du côté frontal et/ou du côté intérieur ; et
un deuxième support de palier (46), lequel est monté, en particulier à l'extérieur, sur le deuxième longeron (50), et supporte la traverse (10) en particulier du côté frontal et/ou du côté intérieur.

15. Véhicule automobile, en particulier véhicule utilitaire, comportant une traverse (10) selon l'une des revendications 1 à 11 ou un dispositif selon l'une des revendications 12 à 14.
